# NEUE EUROPÄISCHE PATENTSCHRIFT

(11) **EP 1 772 693 B2**
(45) Veröffentlichungstag und Bekanntmachung des Hinweises auf die Entscheidung über den Einspruch: **09.09.2015**
(45) Hinweis auf die Patenterteilung: 10.04.2013
(21) Anmeldenummer: 06020085.4
(22) Anmeldetag: 26.09.2006
(51) Int. Cl.: F28D 9/00, F28F 27/02, B23K 1/00, F01M 5/00

(54) **Gelöteter Wärmetauscher und Herstellungsverfahren**
Brazed heat exchanger and manufacturing method
Echangeur de chaleur brasé et procédé de fabrication

(30) Priorität: 08.10.2005 DE 102005048294
(43) Veröffentlichungstag der Anmeldung: 11.04.2007
(73) Patentinhaber: Modine Manufacturing Company, Racine, Wisconsin 53403-2552 (US)
(72) Erfinder: Glück, Rainer Dipl.-Ing., 72070 Tübingen (DE)
(74) Vertreter: Wolter, Klaus-Dietrich

(56) Entgegenhaltungen:
- EP-A- 1 715 146
- EP-A- 1 715 147
- WO-A-2006/097086
- WO-A1-2007/022807
- DE-A1- 3 923 936
- DE-A1- 19 539 255
- DE-U1- 9 309 741
- US-A- 4 831 980
- US-A- 5 588 485
- US-A- 5 950 715
- US-A1- 2003 019 620

## Beschreibung

Die Erfindung bezieht sich auf einen gelöteten Wärmetauscher mit einem Ventilglied und mit den weiteren Merkmalen des Oberbegriffs des Anspruchs 1 sowie auf ein Herstellungsverfahren für den Wärmetauscher.
Der Wärmetauscher ist aus dem deutschen Gebrauchsmuster Nr. 93 09 741.7 bekannt. Dort ist eine als Adapterelement bezeichnete Platte vorgesehen, in der sich eine Bohrung befindet, in welcher das Ventilglied nach dem Löten des Wärmetauschers eingesetzt wird. Anschließend wird der Wärmetauscher mit seinem Ventilglied in ein System eingebaut, beispielsweise in ein Kraftfahrzeug, zum Zwecke der Kühlung bzw. Temperierung von beispielsweise Getriebeöl mittels der Kühlflüssigkeit des Kraftfahrzeugmotors. Das Ventilglied hat die Aufgabe, beispielsweise das Öl wenigstens im Wesentlichen ohne Kühlung durch einen Kanal des Wärmetauschers hindurchströmen zu lassen, wenn die Öltemperatur niedrig ist und keine Kühlung benötigt, und das Öl durch die Strömungskanäle des Wärmetauschers zu zwingen, wenn eine Kühlung des Öls erforderlich ist. Dieser Stand der Technik hat den (theoretischen) Vorteil, dass im Falle einer durch das Ventilglied verursachten Funktionsstörung, der Wärmetauscher aus seiner Betriebsposition demontiert, ein neues Ventilglied eingesetzt und der Wärmetauscher wieder in das System eingebaut werden kann. Das ist allerdings in der Praxis selten der Fall, auch äußerst aufwendig und deshalb unerwünscht. Gewöhnlich müssen Ventilglieder derartig sicher funktionieren, dass ein Auswechseln in der Regel während des Lebenszyklus des Systems nicht notwendig wird. Darüber hinaus wird die Herstellung des bekannten Wärmetauschers mit dem Ventilglied als zu aufwendig angesehen, weil dieser nach dem Abschluss des Lötprozesses weiter bearbeitet werden muss, um das Ventilglied einzusetzen oder einzupassen.
Weiterer Stand der Technik ist der Anmelderin aus US 4 360 055, aus US 4 669 532, aus DE 197 06 894 A1 und aus DE 100 19 029 A1 bekannt, für den die vorstehende Beurteilung in gleicher Weise zutrifft. Das Ventilglied wird über den Öldruck gesteuert, der bei kaltem, relativ zähem Öl entsprechend hoch ist.

In der WO 06/097086A1 wird eine Filter-Kühler-Kombination offenbart. Das Ventilglied befindet sich in einem Anschlusselement für die Filter-Kühler-Kombination und öffnet bzw. schließt einen im Anschlusselement angeordneten Strömungskanal. In der WO 07/022807A1 wird ein Wärmetauscher, insbesondere ein Ölkühler offenbart. Das Ventilglied wird dort nach dem Löten in einen Bypasskanal geschoben und am Kanal positioniert.

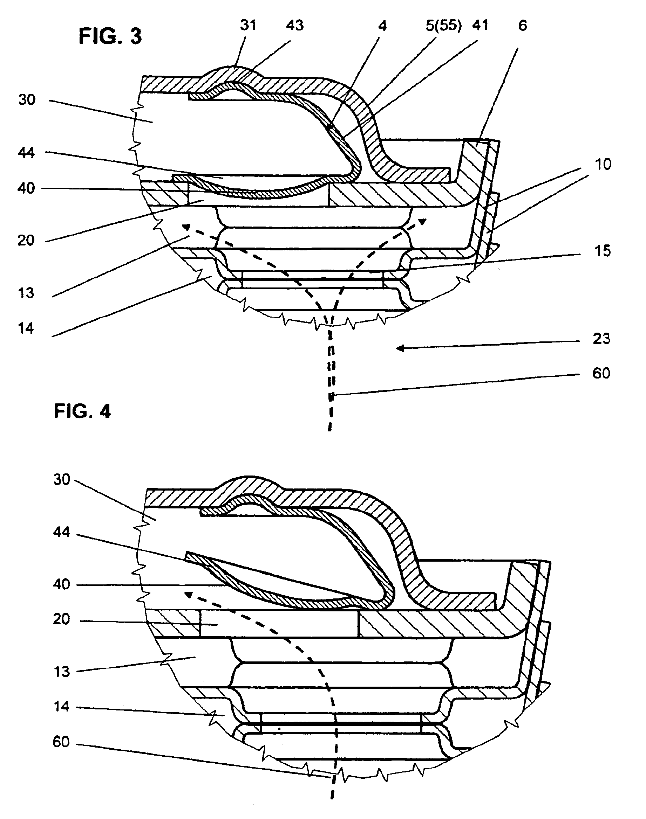

Aus der DE 39 23 936 A1 ist ein Wärmetauscher, insbesondere Ölkühler bekannt. Bei diesem Wärmetauscher bildet ein Rohrpaket, ein Gehäuseboden und ein topfförmiger Gehäusedeckel ein komplett verfügbares Bauteil, welches gelötet wird. Weitere Einzelteile, wie ein zentrales Öl-Rücklaufrohr, ein Ventilglied mit einer Ventilfeder sowie ein am Gehäusedeckel angeordneter Verbindungskanal u. a. Teile werden im Anschluss montiert. Im Ausführungsbeispiel gemäß der dortigen Fig. 4 kann der Verbindungskanal nachträglich angelötet oder angeschweißt werden.

Die Aufgabe der Erfindung besteht in der Bereitstellung eines gelöteten Wärmetauschers mit einem integrierten Ventilglied, der funktionssicher arbeitet, sowie in der Bereitstellung eines Herstellungsverfahrens für den Wärmetauscher mit integriertem Ventilglied, um dessen Herstellungskosten zu reduzieren.

Der erfindungsgemäße Wärmetauscher weist die Merkmale des Anspruchs 1 auf.
Das Ventilglied ist vor dem Löten in den Wärmetauscher einsetzbar, und es ist gemeinsam mit den Einzelteilen des Wärmetauschers mitlötbar. Der Begriff "mitlötbar" bedeutet im vorliegenden Zusammenhang, dass das Ventilglied die Löttemperatur übersteht bzw. ertragen kann, ohne dass dessen Funktionsfähigkeit leidet. Also, entweder ist das Ventilglied unmittelbar an einem Einzelteil angelötet, oder das Ventilglied ist beispielsweise lediglich mechanisch an einem Einzelteil befestigt. Die Befestigung kann auch lediglich durch Kraftschluss erfolgen, indem das Ventilglied beispielsweise unter Vorspannung stehend in seiner Position zwischen zwei Einzelteilen des Wärmetauschers formschlüssig eingeklemmt wird. Das Ventilglied muss demnach nicht unbedingt selbst an einem Einzelteil angelötet sein. Das Ventilglied könnte auch mit einem Einzelteil des Wärmetauschers mittels Schweißung verbunden werden, beispielsweise mittels Punktschweißung, und zwar bevor das Einzelteil mit dem Ventilglied als Baueinheit in den Wärmetauscher eingefügt wird, um den Wärmetauscher erst danach in den Lötofen zu bringen.

Das unmittelbare Anlöten des Ventilglieds selbst könnte beispielsweise zu unkontrollierbaren Lotanhäufungen, Lotperlen usw. führen, die die Funktion des Ventilglieds stören könnten. Schließlich ist das Ventilglied nach dem Löten des Wärmetauschers zum Zwecke der Inspektion oder dergleichen nicht mehr ohne weiteres zugänglich. Aus diesem Grund kann es von Vorteil sein, dass in der Nähe des Ventilglieds kein Lotmaterial vorgesehen ist. Deshalb kann es von Vorteil sein, das Ventilglied, wie erwähnt, entweder mechanisch zu befestigen, beispielsweise indem eine örtliche Umformung des mit dem Ventilglied eine Baueinheit bildenden Einzelteils vorgenommen wird, oder das Ventilglied am Einzelteil anzuschweißen, um die erwähnte Baueinheit zu bilden.

Das Ventilglied kann an einem Einzelteil bzw. Bestandteil des Wärmetauschers , wie etwa an der Grundplatte/Deckplatte, und/oder an einer Zwischenplatte und/oder an einer Wärmetauscherplatte so befestigt sein, dass das beispielsweise unter Temperatur - oder Druckänderungen sich bewegende Teil des Ventilglieds den Kanal im Wesentlichen öffnen bzw. schließen kann.

Das erfindungsgemäße Herstellungsverfahren weist die Merkmale des Anspruchs 6 auf.
Es wird demnach wenigstens ein Einzelteil bzw. Bestandteil des Wärmetauschers mit einem Ventilglied zu einer Baueinheit lösbar oder unlösbar verbunden, die Einzelteile des Wärmetauschers und die Baueinheit werden vormontiert, d.h. die Einzelteile und die Baueinheit werden zum Wärmetauscher zusammengesetzt, und der Lötprozess des Wärmetauschers wird mit dem im Wärmetauscher bereits vorhandenen Ventilglied durchgeführt. Die lösbare Verbindung des Ventilglieds mit einem Einzelteil schließt auch das formschlüssige Einsetzen oder Einklemmen des Ventilglieds zwischen Einzelteilen ein.
Je nach Bedarf wird im Anschluss daran ein Ventilfunktionstest durchgeführt. Dieser Verfahrensschritt wird unter dem Gesichtspunkt der Qualitätssicherung durchgeführt. Der Ventilfunktionstest kann allerdings auch im Zuge des Dichtprüfvorgangs ausgeführt werden. Es kann dabei mit einer kraftmessenden Vorrichtung, welche durch den Kanal des Wärmetauschers hindurch auf das Ventilglied einwirkt auch festgestellt werden, ob das Ventilglied ordnungsgemäß eingesetzt wurde und funktioniert.
Der Wärmetauscher besitzt Wärmetauscherplatten mit wenigstens zwei Öffnungen, die im Wärmetauscher zwei Kanäle bilden. Darunter ist im vorliegenden Zusammenhang zu verstehen, dass es sich entweder um einen so genannten "gehäuselosen" Wärmetauscher, dessen Wärmetauscherplatten mindestens vier Öffnungen, also vier Kanäle, aufweisen, handeln kann, oder auch um einen Wärmetauscher, dessen Stapel aus Wärmetauscherplatten von einem Gehäuse umgeben ist, wobei diese Wärmetauscherplatten zwei Öffnungen, also zwei Kanäle, besitzen. Beide Typen gehören seit langem zum Stand der Technik, der diesbezüglich hier nicht weiter beschrieben werden muss.

Die vorliegende Erfindung wird anhand der beigefügten Figuren beschrieben:
Die Fig. 1 zeigt eine Gesamtansicht des Wärmetauschers mit Schnitt durch die oberste Platte. Die Fig. 2 zeigt ein Detail aus der Fig. 1.
Die Fig. 3 stellt einen Schnitt durch das Ventilglied und ein Ausschnitt aus dem Wärmetauscher dar, mit Ventilglied "geschlossen".
Die Fig. 4 zeigt einen identischen Schnitt, jedoch mit Ventilglied "offen".

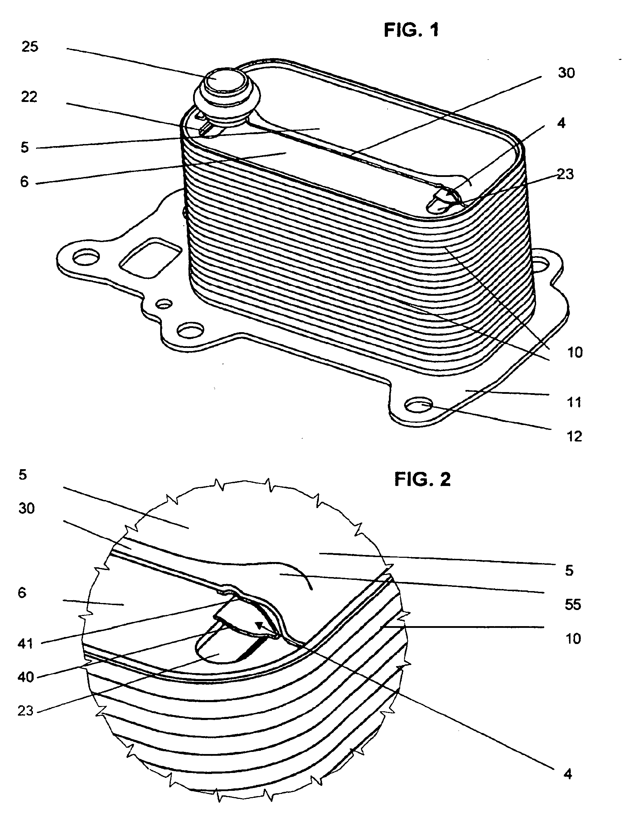

In Fig. 1 ist der gesamte Wärmetauscher dargestellt. Es handelt sich um einen kompakten, gehäuselosen Wärmetauscher, aufgebaut aus seinen Bestandteilen, wie ineinander gestapelten, wannenförmigen Wärmetauscherplatten **10,** Deckplatte, Grundplatte, usw. Alle Wärmetauscherplatten **10** besitzen vier Öffnungen **15,** die im Stapel vier vertikale Kanäle **22, 23** bilden, was das hervorstechende Merkmal eines "gehäuselosen" Wärmetauschers ist. Lediglich zwei dieser Kanäle **22, 23** sind in der Fig. 1 sichtbar. Der eine Kanal **23** ist der Eintrittskanal für eines der Medien, welcher hydraulisch über die zugeordneten Strömungskanäle **13** mit einem anderen Kanal **22,** dem Austrittskanal für dasselbe Medium verbunden ist. Entsprechendes ist für das andere Medium vorhanden. Zwischen den Wärmetauscherplatten **10** befinden sich Strömungskanäle 13, 14 für das jeweilige Medium. (Fig. 3, 4) So fließt beispielsweise durch den Strömungskanal **13** das zu kühlende Öl und durch den Strömungskanal **14** eine Kühlflüssigkeit. Auf einen Strömungskanal **13** für Öl folgt ein Strömungskanal **14** für die Kühlflüssigkeit. Das Ventilglied **4** soll zum einen dazu dienen, das Öl im kalten Zustand, also wenn im wesentlichen keine Kühlung erwünscht ist, an den Strömungskanälen **13** vorbei durch den Bypasskanal **30,** der im Ausführungsbeispiel zwischen der Deckplatte **5** und der Zwischenplatte **6** ausgeformt ist, direkt zum Auslassstutzen **25** zu führen. Und zum anderen soll es dazu dienen, das Öl im erhitzten Zustand durch die Strömungskanäle **13** zu zwingen, so dass es durch die Kühlflüssigkeit gekühlt werden kann. Die Bestandteile des Wärmetauschers werden auf einer Bodenplatte **11,** die Befestigungsbohrungen **12** für den Wärmetauscher aufweist, zusammengesetzt. In dem gezeigten Ausführungsbeispiel treten das Öl und die Kühlflüssigkeit durch die Bodenplatte **11** in den Wärmetauscher ein. Die Kühlflüssigkeit verlässt den Wärmetauscher wieder durch die Bodenplatte **11** (nicht gezeigt) oder je nach Anschlussbedingungen auch anderswo, während das Öl den Wärmetauscher im gezeigten Fall durch den oberen Auslassstutzen **25** verlässt. Die Bodenplatte **11,** die Deckplatte **5** und die Zwischenplatte **6** sind im Vergleich zu den Wärmetauscherplatten **10** aus etwas dickeren Aluminiumblechen hergestellt worden
Um das Ventilglied **4** des Wärmetauschers besser zu erkennen, ist in der Fig. 2 ein Detail aus Fig. 1 vergrößert abgebildet worden. Das Ventilglied **4** sitzt direkt über der Öffnung 20 und verschließt diese durch Formschluss vollständig, wodurch der zugehörige Kanal 23 ebenfalls blockiert ist. In der Deckplatte **5** ist an einem Ende des Bypasskanals **30** eine Auswölbung **55** angebracht, in der das Ventilglied **4** untergebracht ist.
In Fig. 3 und in Fig. 4 ist jeweils der Schnitt durch das Ventilglied **4,** die Zwischenplatte **6,** Deckplatte **5** und die oberen Wärmetauscherplatten **10** dargestellt. In Fig. 3 befindet sich das Ventilglied **4** im geschlossenen Zustand und in Fig. 4 im geöffneten.
Das Ventilglied **4** ist im gezeigten Ausführungsbeispiel eine Ventilfeder. Sie setzt sich aus einem Halteelement **41** und einem beweglichen Verschlusselement **40** zusammen. Im geschlossenen Zustand liegt das Verschlusselement **40** auf der Öffnung **20** der Zwischenplatte **6** formschlüssig auf. Das Ventilglied **4** besteht aus einem geeigneten hitzebeständigen Federstahl, z. B. aus Duratherm 600 oder Inconel X750. Dieses Ventilglied **4** reagiert auf Druckänderungen des Öls im Kanal **23.** Im kalten Zustand, beispielsweise beim so genannten Kaltstart des Motors, weist das Öl einen hohen Druck auf und öffnet das Verschlusselement **40** des Ventilglieds **4.** Das kann in einem bestimmten Anwendungsfall bei einem Druck von etwa 2 bar geschehen. Das Öl fließt somit aus dem Kanal **23** direkt in den Bypasskanal **30** und über den Auslassstutzen **25** wieder aus dem Wärmetauscher heraus, im Wesentlichen ohne durch die Kühlflüssigkeit, die in den Strömungskanälen **14** fließt, gekühlt zu werden. Bei Erwärmung des von unten aus dem Kanal **23** anströmenden Öls wird wegen des geringer gewordenen Drucks eine Schließbewegung des Verschlusselements **40** des Ventilglieds **4** nach unten ausgelöst. Die in den Figuren 3 und 4 eingezeichneten Pfeile **60** stellen die Fließrichtung des Öls dar. Es ist eigentlich nicht notwendig, zu betonen, dass ein völliges Schließen des Kanals **23** nicht unbedingt notwendig ist.

Das vor der Durchführung des Lötprozesses eingesetzte Ventilglied **4** wird zwischen der Deckplatte **5** und der Zwischenplatte **6** eingeklemmt und dabei vorgespannt. Um es möglichst genau über der Öffnung **20** zu positionieren, ist in der Auswölbung **55** der Deckplatte **5** eine Sicke **31** eingeprägt, in die eine korrespondierende Nocke **43** des Halteelements **41** des Ventilglieds **4** eingreift. Auch das Verschlusselement **40** weist eine zur Öffnung **20** korrespondierende Form **44** auf, so dass das Verschlusselement **40** bei geschlossenem Ventilglied **4** formschlüssig auf der Öffnung **20** aufliegt. In dem gezeigten praktischen Fall hat sich beim Löten des Wärmetauschers auch eine Lötverbindung zwischen dem Halteelement **41** und der Innenseite der Deckplatte **5** ausgebildet.
Im Herstellungsprozess dieses Wärmetauschers mit integriertem Ventilglied **4** werden zunächst, wie gehabt, die wannenförmigen Wärmetauscherplatten **10** aufeinander gestapelt, dann wird das Ventilglied **4** über der Öffnung **20** auf der Zwischenplatte **6** aufgesetzt und mit der Deckplatte **5** formschlüssig festgeklemmt. Zusammengehalten wird der vormontierte Wärmetauscher während des Lötprozesses durch eine geeignete Löthilfsvorrichtung. (nicht gezeigt) Nach dem Lötprozess wird ein Funktionstest des Ventilglieds **4** durchgeführt. Das können z. B. mechanische oder hydraulische Funktionstests sein.

## Patentansprüche

1. Gelöteter Wärmetauscher, beispielsweise ein Ölkühler für Kraftfahrzeuge, vorzugsweise ein solcher Wärmetauscher, der gestapelte Wärmetauscherplatten (10) mit wenigstens zwei Öffnungen (15) aufweist, die im Stapel zwei entsprechende Kanäle (22, 23) bilden, wobei in Abständen zwischen den Wärmetauscherplatten (10) vorzugsweise senkrecht zu den Kanälen (22, 23) stehende Strömungskanäle (13, 14) ausgebildet sind, die mit den Kanälen (22, 23) hydraulisch verbunden sind, wobei weitere Einzelteile bzw. Bestandteile des Wärmetauschers vorhanden sind, und ein integriertes Ventilglied (4), welches über der Öffnung (20) eines der Kanäle (22, 23) sitzt und diesen öffnet bzw. schließt, um das dort strömende Medium, beispielsweise Öl, entweder durch die Strömungskanäle (13) oder durch einen Bypasskanal (30) zu leiten,
**dadurch gekennzeichnet, dass** das integrierte Ventilglied (4) an einem Bestandteil des Wärmetauschers lösbar oder unlösbar angebracht ist, und dass das Bestandteil und das Ventilglied (4) gemeinsam mit den anderen Einzelteilen zum Löten des Wärmetauschers zusammengesetzt und mitgelötet wird, wobei das Ventilglied (4) eine Ventilfeder ist und so ausgebildet ist, dass es die Löttemperatur ertragen kann, ohne dass dessen Funktionsfähigkeit leidet.

2. Wärmetauscher nach Anspruch 1, **dadurch gekennzeichnet, dass** das Ventilglied (4) beispielsweise an einer Grundplatte/Deckplatte (5) und/oder an einer Zwischenplatte (6) und/oder an einer Wärmetauscherplatte (10) angebracht ist,

3. Wärmetauscher nach Anspruch 1 oder 2, **dadurch gekennzeichnet, dass** die Ventilfeder ein Halteglied (41) zur lösbaren bzw. unlösbaren Befestigung, die ein formschlüssiges Einklemmen des Ventilglieds (4) umfasst, aufweist.

4. Wärmetauscher nach einem der vorstehenden Ansprüche, **dadurch gekennzeichnet, dass** das Ventilglied (4) ein Verschlussglied (4) aufweist.

5. Wärmetauscher nach einem der vorstehenden Ansprüche, **dadurch gekennzeichnet, dass** das Ventilglied (4) auf Temperatur - oder auf Druckänderungen anspricht.

6. Herstellungsverfahren für gelötete Wärmetauscher, bei dem die metallischen Einzelteile bzw. Bestandteile des Wärmetauschers lötgerecht zusammengesetzt bzw. vormontiert und danach im Lötofen miteinander verbunden werden,
**dadurch gekennzeichnet, dass**
ein Ventilglied (4) im Zuge der Zusammensetzung bzw. der Vormontage der Einzelteile des Wärmetauschers in denselben eingefügt wird,
und dass der Lötprozess des Wärmetauschers mit dem eingefügten Ventilglied (4) durchgeführt wird.

7. Herstellungsverfahren nach Anspruch 6, **dadurch gekennzeichnet, dass** das Ventilglied (4) an dem Einzelteil lösbar oder unlösbar befestigt wird, was formschlüssiges Einklemmen zwischen Einzelteilen umfasst.

8. Herstellungsverfahren nach den Ansprüchen 6 und 7, **dadurch gekennzeichnet, dass** nach Abschluss des Lötprozesses ein Ventilfunktionstest durchgeführt wird.

## Claims

1. Brazed heat exchanger, for example an oil cooler for motor vehicles, preferably a heat exchanger of said type which has stacked heat exchanger plates (10) with at least two openings (15) which form two corresponding ducts (22, 23) in the stack, wherein in spacings between the heat exchanger plates (10) there are formed flow ducts (13, 14) which are preferably perpendicular to the ducts (22, 23) and which are hydraulically connected to the ducts (22, 23), wherein further individual parts or constituent parts of the heat exchanger are provided, and an integrated valve element (4) which is seated over an opening (20) of one of the ducts (22, 23) and opens and closes said duct in order to conduct the medium flowing there, for example oil, either through the flow ducts (13) or through a bypass duct (30),
**characterized in that** the integrated valve element (4) is detachably or non-detachably mounted on a constituent part of the heat exchanger, and **in that** the constituent part and the valve element (4) are assembled together with the other individual parts for the brazing of the heat exchanger and are included in the brazing process, wherein the valve element (4) is a valve spring and is designed such that it can withstand the brazing temperature without impairment of its functionality.

2. Heat exchanger according to Claim 1, **characterized in that** the valve element (4) is mounted for example on a base plate/cover plate (5) and/or on an intermediate plate (6) and/or on a heat exchanger plate (10).

3. Heat exchanger according to Claim 1 or 2, **characterized in that** the valve spring has a retaining element (41) for detachable or non-detachable fastening which comprises positively locking clamping of the valve element (4).

4. Heat exchanger according to one of the preceding claims, **characterized in that** the valve element (4) has a closure element (40).

5. Heat exchanger according to one of the preceding claims, **characterized in that** the valve element (4) responds to changes in temperature or pressure.

6. Production method for brazed heat exchangers, in which the metallic individual parts or constituent parts of the heat exchanger are assembled or preassembled in a manner suitable for brazing and are thereafter connected to one another in the brazing furnace,
**characterized in that**,
during the course of the assembly or preassembly of the individual parts of the heat exchanger, a valve element (4) is inserted therein,
and **in that** the brazing process of the heat exchanger is performed with the valve element (4) inserted.

7. Production method according to Claim 6, **characterized in that** the valve element (4) is detachably or non-detachably fastened to the individual part, said fastening comprising positively locking clamping between individual parts.

8. Production method according to Claims 6 and 7, **characterized in that** a valve function test is performed after the completion of the soldering process.

## Revendications

1. Échangeur de chaleur brasé, par exemple refroidisseur d'huile pour véhicules automobiles, de préférence échangeur de chaleur comprenant des plaques d'échangeur de chaleur (10) empilées avec au moins deux ouvertures (15) formant deux canaux (22, 23) correspondants empilés, des canaux d'écoulement (13, 14) étant formés à une certaine distance l'un de l'autre entre les plaques d'échangeur de chaleur (10), de préférence perpendiculairement aux canaux (22, 23), lesdits canaux d'écoulement étant reliés sur le plan hydraulique aux canaux (22, 23), des pièces individuelles et/ou des composants supplémentaires de l'échangeur de chaleur étant présents et un élément de soupape (4) intégré reposant par-delà une ouverture (20) d'un des canaux (22, 23) et l'ouvrant et/ou le ferment pour conduire l'agent circulant à l'intérieur, par exemple de l'huile, soit à travers les canaux d'écoulement (13) soit à travers un canal de dérivation (30), **caractérisé en ce que** l'élément de soupape (4) intégré est disposé de façon amovible ou inamovible au niveau d'un composant de l'échangeur de chaleur et que le composant et l'élément de soupape (4) sont placés ensemble avec les autres pièces individuelles pour le brasage de l'échangeur de chaleur et brasés ensemble, l'élément de soupape (4) étant un ressort de soupape et étant réalisé de telle sorte qu'il puisse subir la température de brasage sans que son aptitude au fonctionnement n'en souffre.

2. Échangeur de chaleur selon la revendication 1, **caractérisé en ce que** l'élément de soupape (4) est placé par exemple au niveau d'une plaque de fond/plaque de recouvrement (5) et/ou au niveau d'une plaque intermédiaire (6) et/ou au niveau d'une plaque d'échangeur de chaleur (10).

3. Échangeur de chaleur selon la revendication 1 ou 2, **caractérisé en ce que** le ressort de soupape comporte un maillon de blocage (41) pour la fixation amovible et/ou inamovible comprenant un coincement par complémentarité de formes de l'élément de soupape (4).

4. Échangeur de chaleur selon l'une quelconque des revendications précédentes, **caractérisé en ce que** l'élément de soupape (4) comporte un élément de fermeture (40).

5. Échangeur de chaleur selon l'une quelconque des revendications précédentes, **caractérisé en ce que** l'élément de soupape (4) répond à la température - ou aux variations de pression.

6. Procédé de fabrication d'échangeur de chaleur brasé, dans lequel les pièces individuelles et/ou les composants métalliques de l'échangeur de chaleur sont assemblés et/ou prémontés prêts à être brasés avant d'être reliés entre eux dans le four de brasage, **caractérisé en ce que** :
un élément de soupape (4) est ajouté dans l'échangeur lors de la composition et/ou du prémontage des pièces individuelles de l'échangeur de chaleur ; et
le processus de brasage de l'échangeur de chaleur est réalisé à l'aide de l'élément de soupape (4) ajouté.

7. Procédé de fabrication selon la revendication 6, **caractérisé en ce que** l'élément de soupape (4) est fixé de façon amovible ou inamovible au niveau de la pièce individuelle, ce qui comprend le coincement par complémentarité de formes entre les pièces individuelles.

8. Procédé de fabrication selon les revendications 6 et 7, **caractérisé en ce qu'**à la fin du processus de brasage, un test de bon fonctionnement de soupape est réalisé.
